# FASCICULE DE BREVET EUROPEEN

(11) **EP 1 343 977 B1**
(45) Date de publication et mention de la délivrance du brevet: **02.01.2019**
(21) Numéro de dépôt: 01998747.8
(22) Date de dépôt: 26.11.2001
(51) Int. Cl.: F16D 65/18, F16D 65/56

(54) **CYLINDRE DE FREIN A DISQUE RENFERMANT UN MECANISME DE FREIN DE PARC**
SCHEIBENBREMSZYLINDER MIT EINEM FESTSTELLBREMSMECHANISMUS
BRAKE DISC CYLINDER COMPRISING A PARKING BRAKE MECHANISM

(30) Priorité: 28.11.2000 FR 0015467
(43) Date de publication de la demande: 17.09.2003
(73) Titulaire: Chassis Brakes International B.V., 1011 VM Amsterdam (NL)
(72) Inventeur: BOISSEAU, Jean-Pierre, F-75014 Paris (FR); TEICHMANN, Aurélie, F-75019 Paris (FR)
(74) Mandataire: Brevalex
(86) Numéro de dépôt international: PCT/FR2001/003734
(87) Numéro de publication internationale: WO 2002/044582

(56) Documents cités:
- WO-A-00/70237
- DE-A- 19 853 721
- FR-A- 2 778 712

## Description

La présente invention concerne un cylindre de frein à disque avec mécanisme de frein de parc, un frein à disque comportant un tel cylindre et un jeu d'au moins deux tels freins à disque.

On sait que les freins à disques qui sont montés sur les roues arrières des véhicules remplissent les fonctions de freins de roulement, qui est leur destination principale, et de frein de parc ou frein de stationnement.

A cet effet, les cylindres des freins comportent un mécanisme intérieur de frein de parc, qui s'actionne par traction d'un câble.

Un exemple connu d'un tel mécanisme est celui dans lequel le câble aboutit à un levier qui entraîne un arbre en rotation. Cet arbre est solidaire de l'un de deux plateaux circulaires qui se font face et emprisonnent entre eux des billes de métal logées dans des gorges, pour former une rampe à billes. Lorsque le plateau solidaire de l'arbre, désigné plateau d'entrée, tourne par rapport au deuxième plateau, mobile en translation et couramment désigné plateau mobile, les billes roulent dans leur gorge en écartant les deux plateaux l'un par rapport à l'autre. Par un empilement de pièces, ce mouvement relatif des deux plateaux entraîne le serrage des mâchoires du frein autour du disque.

Pour le maintien en rotation du plateau mobile par rapport au plateau d'entrée, le cylindre comporte une butée de blocage constituée par une vis traversant la paroi du cylindre.

Ce mécanisme de frein de parc donne satisfaction quant à son fonctionnement. Toutefois, les inventeurs à la base de la présente invention ont remarqué que la vis de blocage subit des contraintes élevées et d'importants frottements, lesquels se traduisent à la fois par une usure prématurée de ladite vis et par un gaspillage de l'énergie fournie par l'utilisateur au moment de la traction exercée sur le câble. En d'autres termes, la force appliquée sur le levier d'actionnement du frein de parc n'est que partiellement utilisée pour le serrage des mâchoires du frein sur le disque de freinage.
Le document DE 198 53 721 A1 montre un cylindre de frein à disque d'après le préambule de la revendication 1.

La présente invention vise à proposer une structure de mécanisme de frein de parc d'un frein à disque, qui fournit la même qualité de freinage que le dispositif connu mais s'actionne moyennant une force de traction plus faible, car mieux utilisée.

La présente invention a pour objet un cylindre de frein à disque comprenant un piston apte à se déplacer axialement en direction d'un disque et renfermant un mécanisme de frein de parc constitué par :
- un arbre d'entrée prenant appui sur une butée axiale du cylindre s'opposant au déplacement dudit arbre en direction opposée au disque, ledit arbre étant susceptible d'être entraîné en rotation lors d'une commande du frein de parc,
- une rampe à billes comprenant un plateau d'entrée, solidaire en rotation de l'arbre d'entrée, et un plateau mobile, des billes étant logées dans des gorges en regard des deux plateaux, chaque gorge étant bordée par au moins une zone d'échappement sur laquelle la bille correspondante roule lors d'une rotation du plateau d'entrée, de sorte que si le plateau mobile est au moins freiné en rotation, ladite bille écarte les deux plateaux l'un de l'autre,
- un ensemble vis-écrou de rattrapage de jeu, solidaire en rotation d'une part du plateau mobile de la rampe à billes, d'autre part du piston, constituant une entretoise réglable entre le plateau mobile et le piston, par dévissage de la vis dans l'écrou,
caractérisé en ce que l'ensemble vis-écrou comporte un pas de vissage orienté de manière que la mise en compression de l'ensemble vis-écrou génère un couple de rotation s'opposant à l'entraînement du plateau mobile par le plateau d'entrée lors d'une rotation de celui-ci.

En d'autres termes, dans le cylindre de frein selon l'invention, les moments de rotation générés d'une part par la rampe à billes, d'autre part par l'ensemble vis-écrou se compensent mutuellement, de sorte que le plateau mobile n'est plus soumis qu'au moment résultant de la somme algébrique de ces deux moments opposés.

Ainsi, si, comme cela est préféré, les deux moments opposés sont sensiblement égaux en valeur absolue, pour un serrage moyen du frein de parc, le moment résultant est voisin de zéro.

Dans un mode de réalisation préféré de l'invention, l'angle d'inclinaison du pas de vissage de l'ensemble vis-écrou est compris entre 1,75 et 2,25 fois l'angle d'inclinaison moyen de la zone d'échappement de chaque gorge de la rampe à billes.

Cet intervalle de valeurs permet d'obtenir une contrainte sur la vis de blocage voisine de zéro pour un serrage moyen du frein de parc.

Par exemple, pour une zone d'échappement présentant une inclinaison moyenne de 15°, un ensemble vis-écrou ayant un pas de 17 mm s'avère être une des valeurs optimales.

Il convient de noter que la présente invention ne vise la compensation de moments de rotation qu'à partir du moment où les mâchoires du frein sont en contact avec le disque.

De ce fait, le fond des gorges recevant les billes de la rampe à billes peut présenter un profil quelconque, seule la zone d'échappement de la gorge, c'est-à-dire la zone sur laquelle la bille roule alors que les mâchoires du frein sont arrivées au contact du disque, est importante pour la présente invention.

Préalablement à ce contact, les billes roulent sur le fond, éventuellement à profil complexe, de la gorge et écartent les deux plateaux de la rampe, pour amener les mâchoires au voisinage immédiat du disque de frein. Durant cette étape préalable, le moment résultant auquel est soumis le plateau mobile n'est pas minimal car l'ensemble vis-écrou, non encore comprimé, ne génère qu'un faible moment de rotation opposé à celui produit par le plateau d'entrée. Un dispositif de blocage, tel qu'une vis en contact périphérique avec le plateau mobile par une rainure pratiquée dans celui-ci, joue alors son rôle traditionnel de maintien en rotation du plateau mobile, jusqu'à ce que l'ensemble vis-écrou soit comprimé.

Ce dispositif n'est sollicité qu'au début du freinage, pour de faibles tractions exercées sur le câble. Il ne subit donc, de la part de la rainure du plateau mobile, que des forces de friction négligeables par rapport à la force effectivement consacrée à l'actionnement du frein.

La présente invention a également pour objet un frein à disque comprenant un cylindre tel que décrit ci-dessus.

L'invention a également pour objet un jeu d'au moins deux freins à disque pour train de roulement comportant au moins une première roue munie d'un premier frein monté à droite de la roue et une deuxième roue munie d'un deuxième frein monté à gauche de la roue, caractérisé en ce que le premier et le deuxième freins sont des freins tels que décrits ci-dessus.

Dans un tel jeu de freins, les deux freins équipant les première et deuxième roues peuvent différer si l'arrivée du câble de traction se fait dans chaque frein par le même côté et que le câble provoque, dans le premier frein, une rotation lévogyre du plateau d'entrée et, dans le deuxième frein, une rotation dextrogyre du plateau d'entrée. La différence entre les deux freins réside alors dans l'orientation du pas de l'ensemble vis-écrou, qui est opposée à l'orientation des zones d'échappement de la rampe à bille.

Dans le but de mieux faire comprendre l'invention, on va en décrire maintenant un mode de réalisation donné à titre d'exemple non limitatif, en référence au dessin annexé dans lequel :
- la figure 1 est une vue en coupe axiale d'un frein à disque selon un mode de réalisation de l'invention,
- la figure 2 est une vue schématique à plus grande échelle du cylindre de ce frein à disques,

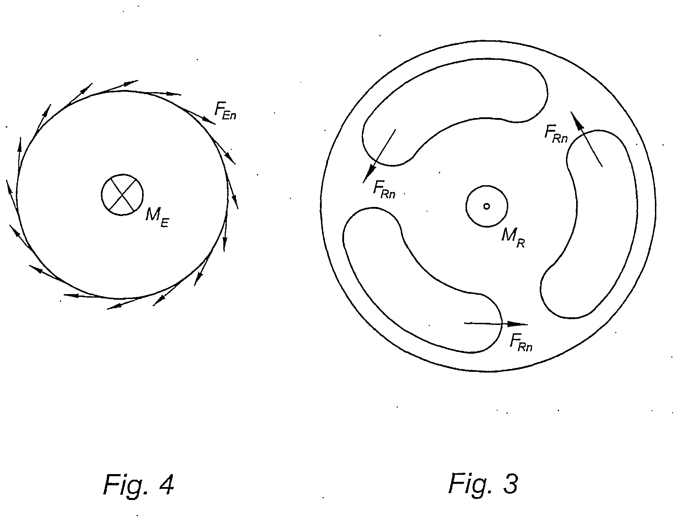

- la figure 3 est une section selon III-III de la figure 2,
- la figure 4 est une section selon IV-IV de la figure 2,
- la figure 5 est un graphe représentant la contrainte subie par la vis de blocage en fonction de l'angle du levier pivotant, pour différentes valeurs du pas de l'ensemble vis-écrou.

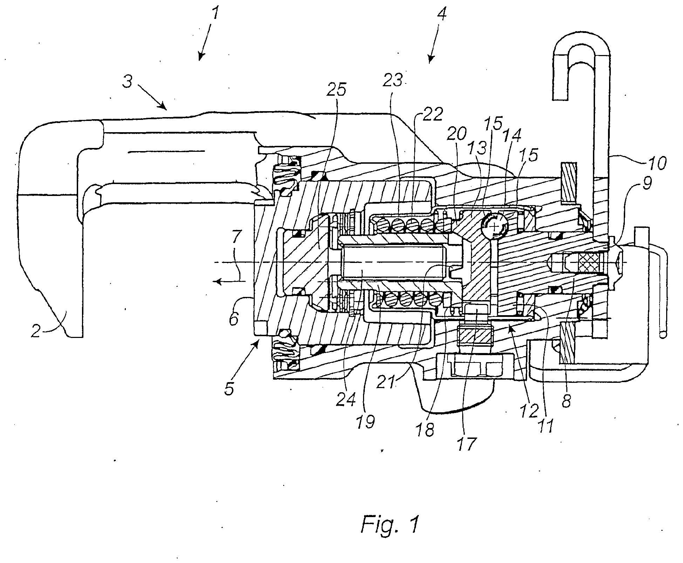

Le frein à disque représenté sur la figure 1 est constitué par un étrier 1 comprenant un nez d'étrier 2 relié par une voûte 3 à un cylindre 4.

Le cylindre loge un piston 5 qui est destiné à exercer, par sa face externe 6, une pression dirigée selon la flèche 7 sur une plaquette de frein (non représentée).

Une autre plaquette de frein (non représentée) est portée par le nez d'étrier 2 pour enfermer le disque (non représenté) de la roue entre les deux plaquettes.

Le cylindre 4 renferme les moyens d'actionnement permettant de serrer les plaquettes sur le disque, d'une part lorsqu'un utilisateur du véhicule enfonce la pédale de frein, d'autre part lorsque l'utilisateur actionne le frein de parc.

La commande à pédale met en oeuvre des moyens hydrauliques bien connus de l'homme du métier, qui ne seront pas détaillés dans la présente description.

Un mécanisme de frein de parc, également désigné frein à main, se combine aux moyens hydrauliques à l'intérieur du cylindre.

Ce mécanisme de frein de parc comprend un arbre d'entrée 8 dont une extrémité 9 fait saillie du cylindre à l'opposé du disque de frein. Par cette extrémité 9 en saillie, l'arbre d'entrée est solidaire en rotation d'un bras pivotant 10 qui est relié, par exemple par un câble (non représenté), au levier de commande du frein de parc situé dans l'habitacle du véhicule.

L'arbre d'entrée 8 se prolonge à l'intérieur du cylindre par un plateau d'entrée 11 d'une rampe à bille 12, elle-même constituée par ledit plateau d'entrée 11, un plateau mobile 13 et trois billes 14 intercalées entre les faces en regard des deux plateaux, à l'intérieur de gorges 15 en arcs de cercles centrées sur l'axe des plateaux prévues à cet effet.

Comme cela est connu, chaque gorge 15 est bordée par une zone d'échappement 16 sur laquelle la bille 14 correspondante roule lors d'une rotation du plateau d'entrée 11, le plateau mobile 13 étant maintenu fixe en rotation tout en étant libre en translation axiale.

Ainsi, lorsque le plateau d'entrée 11 tourne autour de l'axe de l'arbre d'entrée 8, le plateau mobile 13 est repoussé axialement en direction du piston 5.

Une vis de blocage 17 traverse la paroi externe du cylindre 4 pour déboucher à l'intérieur de ce dernier à hauteur du plateau mobile 13, lequel comporte une rainure 18 parallèle à son axe de translation, dans laquelle pénètre l'extrémité de la vis de blocage 17.

Le plateau mobile 13 est donc maintenu en rotation par la vis de blocage 17, mais demeure libre de se translater axialement à l'intérieur du cylindre.

Un manchon taraudé 19, également désigné écrou, s'appuie contre la face du plateau mobile 13 opposée au plateau d'entrée 11 et lui est solidaire en rotation grâce à des dents 20 du plateau mobile pénétrant dans des encoches 21 de l'écrou 19. Cet écrou est repoussé contre le plateau mobile 13 par un ressort hélicoïdal 22 enfermé dans une cloche 23 couvrant ledit ressort et la rampe à billes.

Une vis de réglage 24 est vissée dans l'écrou 19. Cette vis comporte une tête 25 en forme connue de poussoir apte, d'une part à exercer sur le piston 5 une force visant à le déplacer vers le disque de frein, d'autre part à solidariser la vis 24 en rotation avec le piston lorsqu'elle exerce cette force d'appui.

Le fonctionnement de ce mécanisme de frein de parc est en soi connu. On en rappelle brièvement le principe : lorsque le bras 10 pivote, par exemple sous l'action d'un câble relié au levier de frein à main, l'arbre d'entrée 8, et donc le plateau d'entrée 11, pivotent également, et le plateau mobile 13 est repoussé en direction du disque de frein. L'écrou 19, ainsi repoussé, entraîne avec lui la vis 24 dont la tête 25 formant poussoir, immobilisée en rotation dans le piston 5, interdit toute rotation.

Par conséquent, la vis 24 ne peut pas se dévisser dans l'écrou 19 et le mouvement de translation imprimé à l'écrou 19 par le plateau mobile 13 se transmet à la vis 24 puis au piston 5, aux jeux fonctionnels près.

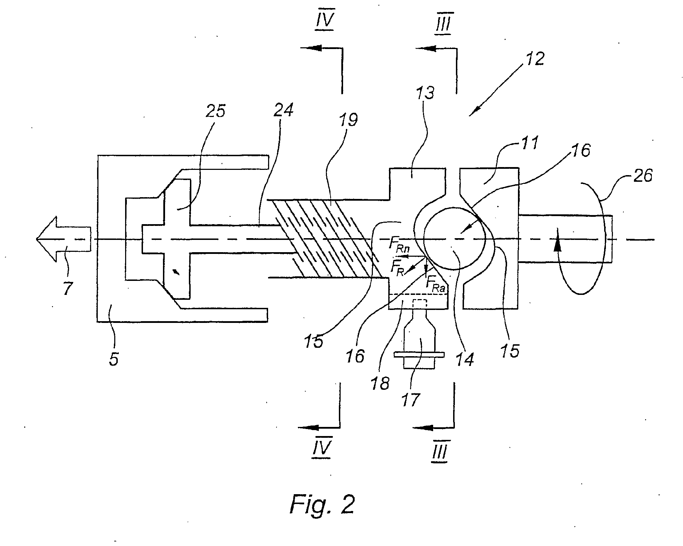

Comme on le voit sur la figure 2, les pentes des zones d'échappement 16 et du filetage de la vis 24 et de l'écrou 19 sont inversées.

Ainsi, lorsque le plateau d'entrée 11 pivote dans le sens indiqué par la flèche 26 sur la figure 2, les billes 14 roulent sur les zones d'échappement inclinées 16 de chaque plateau.

Sur le plateau mobile 13, l'action des billes 14 se traduit par une force de réaction F_{R} ayant une composante axiale F_{Ra} responsable de la translation axiale du plateau d'entrée et une composante F_{Rn} normale à l'axe longitudinal, qui engendre un moment de rotation M_{R} tendant à faire pivoter le plateau mobile 13 dans le sens de rotation du plateau d'entrée 11.

Le plateau mobile 13 transmet l'effort axial à l'écrou 19, qui s'appuie sur la vis 24. La réaction F_{E} sur l'écrou de chaque filet du filetage de la vis a une composante F_{Ea} axiale correspondant à l'effort transmis au piston et une composante F_{En} normale à l'axe longitudinal et qui engendre un moment M_{E} en sens inverse de celui M_{R} résultant de l'action des billes de la rampe à billes.

En conséquence, le moment M_{E} engendré par la vis sur l'écrou tend à compenser le moment M_{R} engendré par les billes sur le plateau mobile.

Compte tenu de la solidarisation en rotation de l'écrou et du plateau mobile, on peut donc minimiser, le moment de rotation auquel est soumis l'ensemble «plateau mobile + écrou» en choisissant convenablement la pente de la rampe à billes et le pas du filetage de la vis de réglage.

Dans l'exemple décrit, trois pas de vis ont été testés pour le filetage entre la vis 24 et l'écrou 19, à savoir 10 millimètres, 16 millimètres et 17 millimètres, pour une même valeur de pente de la rampe à billes de 15°.

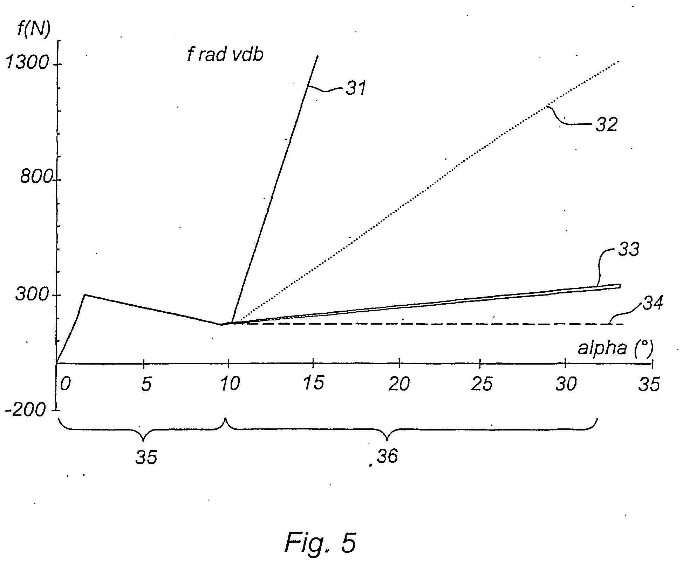

Les résultats de ces tests apparaissent à la figure 5, qui est un graphe représentant par les courbes 32 à 34 l'effort radial, exprimé en Newtons, exercé sur la vis d'arrêt 17 en fonction de l'angle du levier pivotant 10, exprimé en degrés.

A titre de comparaison, on a également porté sur le graphe de la figure 5 la courbe 31 représentant l'effort radial obtenu avec un cylindre de frein de l'état de la technique dans lequel le filetage et les rampes sont orientés dans le même sens, le filetage ayant un pas de 10 millimètres.

Chaque courbe 31 à 34 d'effort axial comporte une première phase 35 de déplacement axial sans réaction du piston, jusqu'à environ 10 degrés de rotation du levier, correspondant à la consommation des jeux axiaux et radiaux du mécanisme de frein de parc. La deuxième phase 36 correspond à la phase de transmission effective d'efforts au piston.

En inversant simplement les pentes entre filetage et rampes à billes et en conservant le pas de 10 mm, on obtient une diminution très substantielle de l'effort radial exercé sur la vis d'arrêt, comme l'indique la courbe 32.

Pour un pas de 16 millimètres, la courbe 33 s'aplatit davantage et l'effort ne dépasse pas 300 newtons.

- Pour un pas de 17 millimètres, l'effort 34 est maintenu à moins de 200 newtons, valeur nécessaire au rattrapage des jeux.

Il ressort très clairement de ces essais qu'un rapport entre angle de filetage et angle de rampe à billes compris entre 1,75 et 2,25 permet de minimiser considérablement l'effort à exercer sur le câble pour actionner efficacement le frein de parc.

Les exemples décrits ci-dessus ne sont nullement limitatifs de la portée de l'invention, laquelle est définie par les revendication annexées.

## Revendications

1. Cylindre de frein à disque comprenant un piston (5) apte à se déplacer axialement en direction d'un disque et renfermant un mécanisme de frein de parc constitué par :
- un arbre d'entrée (8) prenant appui sur une butée axiale du cylindre s'opposant au déplacement dudit arbre en direction opposée au disque, ledit arbre étant susceptible d'être entraîné en rotation lors d'une commande du frein de parc,
- une rampe à billes (12) comprenant un plateau d'entrée (11), solidaire en rotation de l'arbre d'entrée (8), et un plateau mobile (13), des billes (14) étant logées dans des gorges (15) en regard des deux plateaux, chaque gorge (15) étant bordée par au moins une zone d'échappement (16) sur laquelle la bille correspondante roule lors d'une rotation du plateau d'entrée (11), de sorte que si le plateau mobile (13) est au moins freiné en rotation, ladite bille écarte les deux plateaux l'un de l'autre,
- un ensemble vis(24)-écrou(19) de rattrapage de jeu, solidaire en rotation d'une part du plateau mobile (13) de la rampe à billes (12), d'autre part du piston (5), constituant une entretoise réglable entre le plateau mobile (13) et le piston (5), par dévissage de la vis dans l'écrou,
**caractérisé en ce que** l'ensemble vis(24)-écrou(19) comporte un pas de vissage orienté de manière que la mise en compression de l'ensemble vis-écrou génère un couple de rotation s'opposant à l'entraînement du plateau mobile (13) par le plateau d'entrée (11) lors d'une rotation de celui-ci.

2. Cylindre selon la revendication 1, **caractérisé en ce que** le pas de vissage de l'ensemble vis-écrou (24,19) est déterminé de manière que le couple de rotation généré par ledit ensemble mis en compression est voisin, en valeur absolue, du couple transmis par le plateau d'entrée (11) au plateau mobile (13).

3. Cylindre selon la revendication 2, **caractérisé en ce que** l'angle d'inclinaison du pas de vissage de l'ensemble vis-écrou (24,19) est compris entre 1,75 et 2,25 fois l'angle d'inclinaison moyen de la zone d'échappement (16) de chaque gorge (15) de la rampe à billes (12).

4. Frein à disque, **caractérisé en ce qu'**il comporte un cylindre selon l'une quelconque des revendications 1 à 3.

5. Jeu d'au moins deux freins à disque pour train de roulement comportant au moins une première roue munie d'un premier frein monté à droite de la roue et une deuxième roue munie d'un deuxième frein monté à gauche de la roue, **caractérisé en ce que** le premier et le deuxième freins sont des freins à disque selon la revendication 4.

## Patentansprüche

1. Scheibenbremszylinder, umfassend einen Kolben (5), der dazu ausgelegt ist, sich axial in Richtung einer Scheibe zu verlagern, und der einen Parkbremsmechanismus einschließt, gebildet durch:
- eine Eingangswelle (8), die an einem axialen Anschlag des Zylinders anliegt, der einer Verlagerung der Welle in einer Richtung entgegengesetzt zur Scheibe entgegenwirkt, wobei die Welle dazu ausgelegt ist, während eines Parkbremsbefehls zur Drehung angetrieben zu werden,
- eine Kugelrampe (12), umfassend eine Eingangsplatte (11), die drehfest mit der Eingangswelle (8) verbunden ist, und eine bewegliche Platte (13), wobei Kugeln (14) in Kehlen (15) gegenüber den zwei Platten aufgenommen sind, wobei jede Kehle (15) durch wenigstens eine Ausstoßzone (16) eingefasst ist, auf der die entsprechende Kugel während einer Drehung der Eingangsplatte (11) rollt, derart, dass wenn die bewegliche Platte (13) wenigstens in der Drehung abgebremst wird, die Kugel die zwei Platten voneinander beabstandet,
- eine Gesamtheitsschraube (24) -Mutter (19) zur Spielnachstellung, die drehfest einerseits mit der beweglichen Platte (13) der Kugelrampe (12) und andererseits mit dem Kolben (5) ist, und die einen regelbaren Abstandshalter zwischen der beweglichen Platte (13) und dem Kolben (5) durch Herausschrauben der Schraube aus der Mutter bildet,
**dadurch gekennzeichnet, dass** die Gesamtheitsschraube (24) -Mutter (19) einen Schraubengang umfasst, der derart orientiert ist, dass Unter-Kompression-Setzen der Gesamtheitsschraube -Mutter ein Drehmoment erzeugt, das dem Antrieb der beweglichen Platte (13) durch die Eingangsplatte (11) während einer Drehung derselben entgegenwirkt.

2. Zylinder nach Anspruch 1, **dadurch gekennzeichnet, dass** der Schraubengang der Gesamtheitsschraube -Mutter (24, 19) derart bestimmt ist, dass das Drehmoment, welches durch die unter Kompression gesetzte Gesamtheit erzeugt wird, in Absolutwerten nahe dem Moment ist, das von der Eingangsplatte (11) auf die bewegliche Platte (13) übertragen wird.

3. Zylinder nach Anspruch 2, **dadurch gekennzeichnet, dass** der Neigungswinkel des Schraubengangs der Gesamtheitsschraube -Mutter (24, 19) enthalten ist zwischen 1,75 und 2,25 mal dem mittleren Neigungswinkel der Ausstoßzone (16) jeder Kehle (15) der Kugelrampe (12).

4. Scheibenbremse, **dadurch gekennzeichnet, dass** sie einen Zylinder nach einem der Ansprüche 1 bis 3 umfasst.

5. Satz von wenigstens zwei Scheibenbremsen für ein Fahrgestell, umfassend wenigstens ein erstes Rad, das mit einer ersten Bremse ausgestattet ist, die rechts von dem Rad montiert ist, und ein zweites Rad, das mit einer zweiten Bremse ausgestattet ist, die links von dem Rad montiert ist, **dadurch gekennzeichnet, dass** die erste und die zweite Bremse Scheibenbremsen nach Anspruch 4 sind.

## Claims

1. Brake disc cylinder comprising a piston (5) capable of moving axially in the direction of a disc and enclosing a parking brake mechanism consisting of:
- an input shaft (8) supported on an axial abutment of the cylinder opposing the movement of said shaft in the direction opposite to the disc, said shaft being capable of being driven in rotation when the parking brake control is operated,
- a ball ramp (12) comprising an input plate (11), integral in rotation with the input shaft (8), and a movable plate (13), balls (14) being housed in grooves (15) facing the two plates, each groove (15) being bordered by at least one escape zone (16) on which the corresponding ball rolls during a rotation of the input plate (11), so that if the movable plate (13) is at least braked in rotation, said ball separates the two plates from one another,
- a bolt (24)- nut (19) play adjusting assembly, integral in rotation, on the one hand, with the movable plate (13) of the ball ramp (12), on the other hand of the piston (5), constituting an adjustable spacer, between the movable plate (13) and the piston (5), by unscrewing the bolt in the nut,
**characterized in that** the bolt (24)-nut (19) assembly includes a screw thread pitch oriented so that the compression of the bolt-nut assembly generates a rotation torque opposing the driving of the movable plate (13) by the input plate (11) during a rotation thereof.

2. The cylinder according to claim 1, **characterized in that** the screw thread pitch of the bolt/nut assembly (24, 19) is determined so that the rotation torque generated by said assembly placed in compression is close, in absolute value, to the torque transmitted by the input plate (11) to the movable plate (13).

3. The cylinder according to claim 2, **characterized in that** the angle of inclination of the screw thread pitch of the bolt-nut assembly (24, 19) is comprised between 1.75 and 2.25 times the mean angle of inclination of the escape zone (16) of each groove (15) of the ball ramp (12).

4. A disc brake, **characterized in that** it includes a cylinder according to any one of claims 1 to 3.

5. A set of at least two disc brakes for a wheel train including at least one first wheel provided with a first brake mounted to the right of the wheel and a second wheel provided with a second brake mounted to the left of the wheel, **characterized in that** the first and the second brakes are disc brakes according to claim 4.
